Europäisches Patentamt

European Patent Office

Office européen des brevets

(19)

(11) Veröffentlichungsnummer: **0 280 049 B1**

# EUROPÄISCHE PATENTSCHRIFT

(45) Veröffentlichungstag der Patentschrift: **24.07.91**

(51) Int. Cl.⁵: **B65H 18/02**, B65H 16/06

(21) Anmeldenummer: **88101066.4**

(22) Anmeldetag: **26.01.88**

(54) **Klapplager.**

(30) Priorität: **26.02.87 DE 3706166**

(43) Veröffentlichungstag der Anmeldung:
**31.08.88 Patentblatt 88/35**

(45) Bekanntmachung des Hinweises auf die
Patenterteilung:
**24.07.91 Patentblatt 91/30**

(84) Benannte Vertragsstaaten:
**CH DE ES FR GB IT LI SE**

(56) Entgegenhaltungen:
**EP-A- 194 356**
**DE-A- 3 127 553**
**DE-C- 917 592**
**DE-U- 8 507 454**

(73) Patentinhaber: **Ludwig Boschert GmbH & Co.**
**KG**
**Mattenstrasse 1**
**W-7850 Lörrach-Hauingen(DE)**

(72) Erfinder: **Fazis, Hermann**
**Läublinstrasse 26**
**W-7858 Weil am Rhein(DE)**

(74) Vertreter: **Schmitt, Hans, Dipl.-Ing. et al**
**Patentanwälte Dipl.-Ing H. Schmitt Dipl.-Ing.**
**W. Maucher Dreikönigstrasse 13**
**W-7800 Freiburg(DE)**

## Beschreibung

Die Erfindung betrifft ein Klapplager mit einer eine Ausnehmung aufweisenden Wellenaufnahme für eine mit einem stirnseitigen Zapfen formschlüssig einlegbare Welle, einen Wickelstab od.dgl. zum Auf- oder Abwickeln von Werkstoffbahnen und mit einem mitdrehenden Handrad, das um eine quer zur Drehachse des Klapplagers verlaufende Schwenkachse aus dem Bereich der Wellenaufnahme verschwenkbar ist und in Schließposition mit einer Verschlußöffnung einen Verschluß der Ausnehmung der Wellenaufnahme bildet und in dieser Verschlußstellung durch wenigstens ein zwischen Handrad und Wellenaufnahme angeordnetes Element verriegelbar ist.

Ein derartiges Klapplager ist aus dem Deutschen Patent 35 09 108 bekannt. Als die Verschlußstellung des Handrades verriegelndes Element ist dabei eine Sperrklinke vorgesehen. Diese hat sich bewährt, weil sie das Handrad in der Verschlußstellung auch gegenüber größeren, von schweren Wickeln ausgehenden Kräften formschlüssig festlegt. Allerdings ist es erforderlich, diese Sperrklinke mit einer relativ starken Feder in ihrer Verschlußlage zu halten, damit sie sich nicht unter dem Einfluß der Fliegkraft beim Rotieren der Wellenaufnahme und des Handrades selbsttätig öffnen kann.

Da sie aus Platzgründen und zur Vermeidung von Beschädigungen beim Einlegen des Wickelstabes weitgehend im Umriß des Handrades angeordnet ist, muß diese Sperrklinke praktisch ausschließlich mit Fingerkraft geöffnet werden, wobei die erwähnte hohe Federkraft überwunden werden muß. Eine Ausgestaltung dieser Verriegelung für eine maschinelle Betätigung scheint kaum möglich, weil dazu eine Hilfsvorrichtung erforderlich wäre, die am Handrad über dessen Umriß erheblich überstehen würde und somit das Ausheben und Einlegen der Wickelstäbe mit Hebezeugen behindern könnte.

Bei dem DE-Patent 31 27 553 ist eine Hilfsvorrichtung zum maschinellen Betätigen des Handrades vorgesehen, die es in der Praxis erforderlich macht, das Ausheben und Einlegen mit großer Sorgfalt durchzuführen, um diese Hilfsvorrichtung nicht zu beschädigen.

Es besteht deshalb die Aufgabe, ein Klapplager der eingangs erwähnten Art zu schaffen, bei welchem das Handrad auch gegenüber sehr großen Kräften, wie sie von besonders schweren Wickeln ausgehen können, sich er in Verschlußlage zu halten, dennoch aber aus Entriegeln dieser Verschlußlage zu erleichtern.

Die Lösung dieser Aufgabe besteht darin, daß das Verriegelungselement für das Handrad ein Kniehebel mit wenigstens zwei über ein gemeinsames Gelenk miteinander verbundenen Schenkeln ist, dessen erster Schenkel gelenkig mit der - mitdrehenden - Wellenaufnahme und dessen zweiter Schenkel ebenfalls gelenkig mit dem Handrad an einer von dessen Schwenkachse beabstandeten Stelle befestigt ist, und daß der Kniehebel in Schließstellung des Handrades in Streckposition fixiert ist und seine Schenkel beim Öffnen des Handrades an ihrem gemeinsamen Gelenk in eine Winkelstellung zueinander haltbar sind.

Es ist an sich bekannt, daß ein Kniehebel in gestreckter Position hohe Haltekräfte aufnehmen kann. Dies wird im vorliegenden Falle für die Fixierung der Verschlußlage ausgenutzt, wobei aber der Vorteil nutzbar gemacht wird, daß bei stehendem Handrad dieser Kniehebel relativ leicht abgeknickt werden kann, was gleichzeitig auch zum Aufklappen des Handrades von der Ausnehmung der Wellenaufnahme weg führt. Da der Kniehebel zwischen Handrad und Wellenaufnahme praktisch im Schwenkweg des Handrades angeordnet ist, ist er nicht gefährdet, wenn Wickel oder Wickelstäbe eingelegt oder ausgehoben werden. Besonders vorteilhaft ist dabei, daß die Betätigung dieses Sperrelementes in Form eines Kniehebels praktisch eine Doppelfunktion ausführen kann, weil dadurch die Sperrung des Handrades in Schließstellung möglich ist, gleichzeitig aber auch die Verschwenkung des Handrades durchgeführt werden kann. Selbstverständlich kann aber auch beispielsweise beim Verschwenken des Handrades in Sperrstellung am Handrad selbst angegriffen werden, wodurch dann der Kniehebel gestreckt wird.

Zweckmäßig ist es, wenn der Kniehebel einerseits an der oberen Seite der Wellenaufnahme und andererseits oberhalb der im Handrad angeordneten Verschlußöffnung an dem Handrad angreift. Er hat dann einen größtmöglichen Abstand von der Schwenkachse des Handrades, greift also unter größtmöglichem Hebelarm an dem Handrad an.

Der Kniehebel kann durch eine Haltekraft in Schließstellung gehalten sein, die beim Knicken des Kniehebels um das gemeinsame Gelenk zum Öffnen des Handrades überwindbar ist. Dadurch wird sichergestellt, daß sich der Kniehebel nicht selbsttätig beispielsweise durch Fliehkräfte beim Rotieren abknickt und dann seine Sperrfunktion verliert.

Eine Möglichkeit zur Sicherung der Schließstellung kann darin bestehen, daß das gemeinsame Gelenk der beiden Kniehebelschenkel in Schließstellung auf der der Öffnungsrichtung entgegengesetzten Seite einer Verbindungslinie zwischen der Schwenklagerung des ersten Schenkels und der Anlenkung des zweiten Schenkels am Handrad angeordnet ist und diese Schließposition gegen ein Durchknicken entgegen der Öffnungsrichtung durch einen Anschlag gesichert ist. Bei Öffnen eines so gestalteten Kniehebels muß er also zunächst aus dieser Schließlage etwas durchgestreckt werden, bevor er dann in seine Öffnungsposition geknickt werden kann. Die vorerwähnte Haltekraft ist dabei zu überwinden, was jedoch bei entsprechend dimensionierten Hebelverhältnissen gut möglich ist.

Um die Bedienbarkeit beim Schließen und vor allem auch beim Öffnen des Kniehebels weiter zu erleichtern und zu verbessern, kann an dem Kniehebel, vorzugsweise an einem Schenkel, insbesondere an dem mit der Wellenaufnahme verbundenen Schenkel ein Betätigungsglied zum Verschwenken und Öffnen des Kniehebels beim Aufschwenken des Handrades angreifen. Somit muß der Benutzer nicht unmittelbar am Kniehebel selbst von Hand oder mittels eines Werkzeuges angreifen. Dabei ist der Kniehebel beim Aufschwenken des Handrades mit seinem gemeinsamen Gelenk von der Schwenkachse des Handrades weg nach oben bewegbar, um in dem Bereich zwischen Handrad und Wellenaufnahme gut zugänglich zu bleiben. Denkbar wäre natürlich auch eine entgegengesetzte Faltrichtung für den Kniehebel, der dann sogar durch die Fliehkräfte in seine entsprechende Schließposition gedrückt würde.

Das Betätigungsglied zum Öffnen des Kniehebels kann - bei stillstehendem Klapplager - von unter her an dem Kniehebel, vorzugsweise an einem von dem ersten Schenkel abgehenden Hebelarm angreifen. Dabei ist es vorteilhaft, wenn das Betätigungsglied eine Schubstange ist, die in einer in axialer Richtung gesehen außerhalb der Ausnehmung der Wellenaufnahme angeordneten Lochung od.dgl. der Wellenaufnahme vorzugsweise gegen die Kraft einer Feder zum Lösen des Kniehebels nach oben verschiebbar ist. Dies ergibt auch bei einem zum Öffnen des Handrades nach außen knickbaren Kniehebel dessen Fixierung in Schließstellung durch die Fliehkräfte, weil die Fliehkräfte dann an dieser Schubstange entgegen der Öffnungsrichtung angreifen können. Darüberhinaus wird die Sicherung der Schließstellung durch die Kraft der Feder unterstützt oder überwiegend oder in erster Linie bewirkt.

Eine Ausgestaltung der Erfindung und der vorstehenden Merkmale kann darin bestehen, daß zum Abknicken des Kniehebels beim Öffnen des Handrades eine mechanische Verstellvorrichtung, beispielsweise ein mit einem Kolben versehener Arbeitszylinder, eine Verstellspindel, eine motorisch angetriebene Schub- oder Pleuelstange, eine Zahnstange od.dgl. vorgesehen ist. Die Verwendung eines zum Öffnen abknickbaren Kniehebels erlaubt nämlich auf einfache Weise, dieses Abknikken mit einer der vorerwähnten mechanischen Verstellvorrichtungen durchzuführen, was natürlich umgekehrt auch ein maschinelles Schließen und Sichern der Schließstellung ergibt. Vor allem bei einer eine Lochung der Wellenaufnahme durchsetzenden Schubstange ergibt sich dabei eine platzsparende Anordnung auch der mechanischen Verstellvorrichtung, ohne daß diese in den Bereich der Ausnehmung der Wellenaufnahme und ihrer Umgebung gelangt, die beim Ausheben und Einlegen eines Wickels freigehalten bleiben sollte.

Besonders zweckmäßig ist es, wenn die maschinelle Verstellvorrichtung an der zu Öffnen des Kniehebels dienendenSchubstange etwa in deren Fortsetzung, unterhalb der Wellenaufnahme angreift.

Die Schubstange kann an ihrem unteren Ende einen eine Druckfeder übergreifenden Bund haben und die Druckfeder kann mit der Schubstange zusammen in der Ausnehmung für die Schubstange angeordnet sein und sich mit ihrem dem Bund entgegengesetzten Ende an einer Verengung der Ausnehmung abstützen. Dies ergibt eine sehr einfache und platzsparende Anordnung eines schubstangenartigen Betätigungsgliedes, welches sehr einfach beispielsweise über einen unterhalb der Wellenaufnahme montierten Arbeitszylinder beaufschlagt werden kann. Dabei ergibt sich noch die Weiterbildung, daß die mechanische Verstellvorrichtung nur bei etwa vertikal angeordneter Schubstange - also bei stillstehendem Klapplager - mit dieser in Wirkverbindung und bei demgegenüber verdrehter Wellenaufnahme durch den Umfang dieser Wellenaufnahme von der Schubstange abgeschirmt und abgekoppelt ist.

Es sei noch erwähnt, daß einer der Schenkel des Kniehebels zweckmäßigerweise als Doppellasche ausgebildet ist, deren Einzellaschen im Bereich des gemeinsamen Gelenkes den anderen Schenkel umgreift.

Insgesamt ergibt sich ein Klapplager, bei welchem der zwischen Handrad und Wellenaufnahme vorhandenen Platz durch ein sehr effektives Verriegelungselement, nämlich einen Kniehebel ausgenutzt werden kann, wobei dieser Platz auch dazu ausreicht, eine maschinelle Betätigungsvorrichtung für diesen Kniehebel vorzusehen, die eine Automatisierung des Öffnens und Schließens und Handrades und eine Fernbedienung erlaubt. Dennoch können extreme Belastungen und Kräfte, die in Öffnungsrichtung auf das Handrad einwirken könnten, mit Sicherheit aufgefangen werden, so daß ein selbsttätiges Öffnen des Handrades vermieden wird. Das Öffnen des Handrades bei Stillstand ist aber dennoch sowohl bei einer Betätigung von Hand als auch vor allem bei maschineller Betätigung sehr leicht möglich und vermeidet, daß nur Fingerkräfte aufgebracht werden können.

Nachstehend ist die Erfindung mit ihren ihr als wesentlich zugehörenden Einzelheiten anhand der Zeichnung noch näher beschrieben. Es zeigt:

Fig. 1    einen Längsschnitt durch ein erfindungsgemäßes Klapplager, bei welchem sich das Handrad in Schließstellung befindet, seine Offenstellung aber gestrichelt angedeutet ist, und

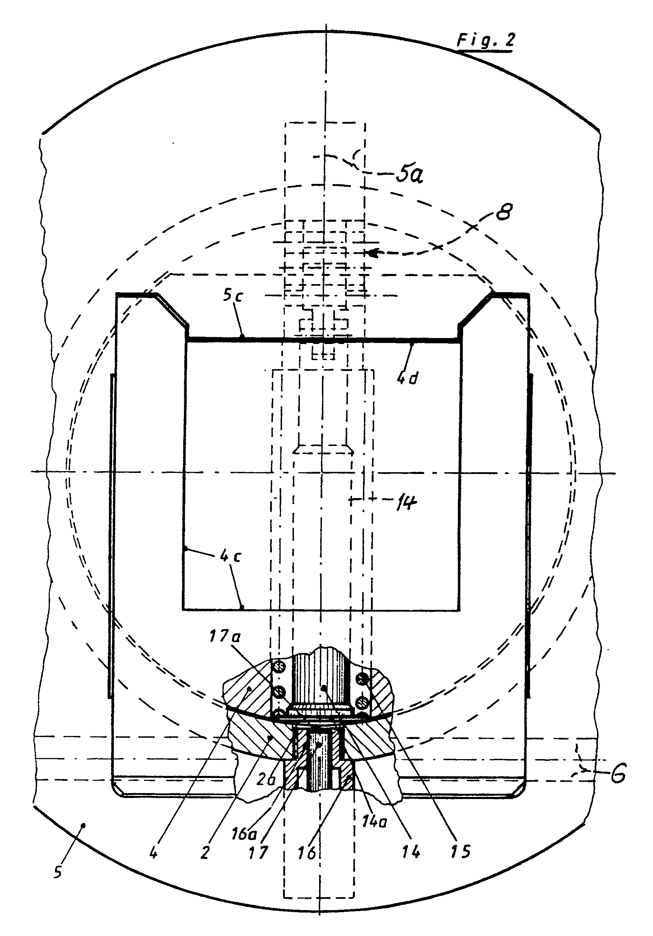

Fig. 2 eine Ansicht des Handrades mit einem Teilschnitt im Bereich der maschinellen Betätigungsvorrichtung für das als Kniehebel ausgebildete Verriegelungselement für das Handrad.

Auf einem Maschinengestell 1 ist ein Stehlagergehäuse 2 befestigt, in dessen Wälzlagern 3 eine Wellenaufnahme 4 drehbar gelagert ist. An dieser Wellenaufnahme 4 ist ein Handrad 5 mittels eines Bolzens 6 schwenkbar gelagert. Die Wellenaufnahme 4 hat eine im Ausführungsbeispiel vierkantige Ausnehmung 4c, in welche eine nicht näher dargestellter stirnseitiger Zapfen eines Wickelstabes formschlüssig eingelegt werden kann. Dieser wird mit Hilfe der Fläche 5b des Handrades 5 beim Verdrehen der Wellenaufnahme 4 am Herausfallen gehindert und hält den Wickelstab oder Wickelbaum spielfrei fest. Es handelt sich bei der vorbeschriebenen Vorrichtung insgesamt um ein bekanntes Klapplager mit einem Handrad entsprechend dem Deutschen Patent 917 592.

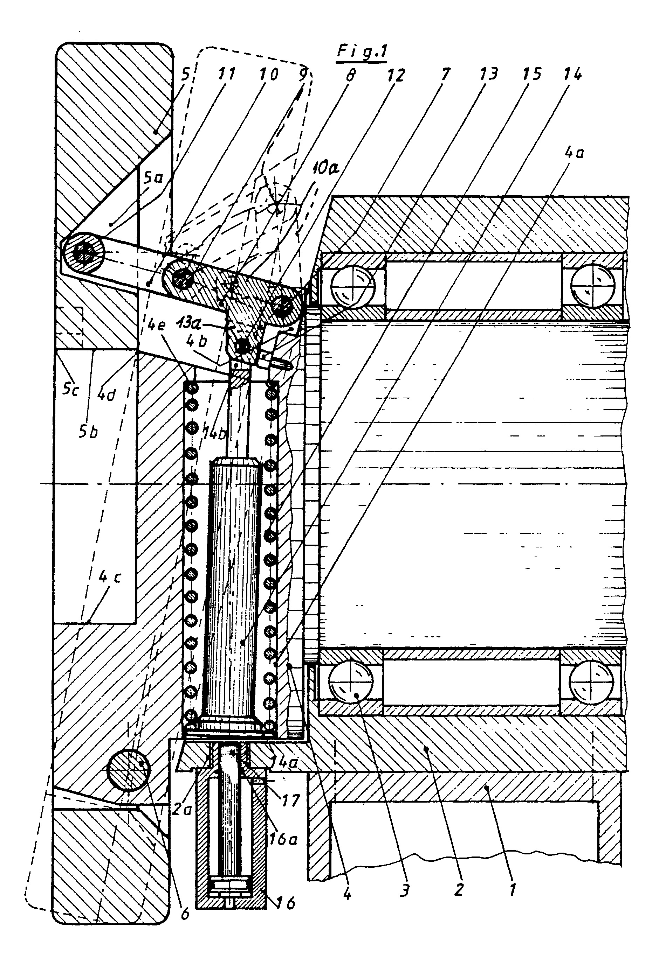

Zur Verriegelung des Handrades 5 in der mit durchgezogenen Strichen in Fig.1 dargestellten Verschlußlage ist ein Kniehebel 8 mit zwei über ein gemeinsames Gelenk 9 in Form eines Bolzens miteinander verbundenen Schenkeln 10 und 10a vorgesehen, dessen erster Schenkel 10a über einen Bolzen 7 in einer Ausnehmung 4b der Wellenaufnahme 4 und dessen zweiter Schenkel 10 über einen Bolzen 11 ebenfalls gelenkig, jedoch mit dem Handrad 5 an einer von dessen Schwenkachse 6 beabstandeten Stelle befestigt ist. Dieser Kniehebel 8 ist in der dargestellten Schließstellung des Handrades 5 in Streckposition fixiert und seine Schenkel 10 und 10a sind gemäß der gestrichelten Darstellung der Fig.1 beim Öffnen des Handrades 5, also beim Verschwenken des Handrades 5 um seine Schwenkachse 6 relativ zu der Wellenaufnahme 4 an ihrem gemeinsamen Gelenk 9 in eine Winkelstellung zueinander faltbar.

Um genügend Platz für den Kniehebel 8 in dem Zwischenraum zwischen der Ausnehmung 4b der Wellenaufnahme 4 und dem Handrad 5 zu erhalten, hat das Handrad 5 eine Ausnehmung 5a, innerhalb welcher sich die Schwenklagerung 11 für den zweiten Schenkel 10 befindet, wobei diese Ausnehmung 5a sich zur Rückseite des Handrades hin derart erweitert, daß auch der verschwenkte Schenkel 10 genügend Platz findet.

Fig.1 macht deutlich, daß der Kniehebel 8 einerseits an der oberen Seite der Wellenaufnahme 4 und andererseits oberhalb der im Handrad 5 angeordneten Verschlußöffnung 5b an dem Handrad 5 angreift. In noch zu beschreibender Weise wird der Kniehebel 8 durch eine Haltekraft in der in Fig.1 dargestellten Schließstellung gehalten, die beim Knicken des Kniehebels 8 aus der gestreckten Position nach oben um das gemeinsame Gelenk 9 zum Öffnen des Handrades 5 überwindbar ist. Dabei ist der Kniehebel 8 gegen die Durchknicken entgegen dieser Öffnungsrichtung durch einen Anschlag 13 gesichert, gegen welchen im Ausführungsbeispiel ein von dem ersten Schenkel 10a abgehender Hebelarm 13a angreift.

Im Ausführungsbeispiel greift an dem Kniehebel 8 und zwar an dem mit der Wellenaufnahme 4 verbundenen Schenkel 10a und dabei an dem von diesem abgehenden Hebelarm 13a ein Betätigungsglied in Form einer Schubstange 14 an, um den Kniehebel 8 zu falten und zu öffnen und dadurch auch das Aufschwenken des Handrades 5 durchzuführen. In Fig.1 erkennt man deutlich, daß dabei der Kniehebel 8 beim Aufschwenken des Handrades 5 mit seinem gemeinsamen Gelenk 9 von der Schwenkachse 6 des Handrades 5 weg nach oben bewegbar ist, weil dort selbstverständlich mehr Platz für eine solche Knickung ist, als eine entgegengesetzte Öffnungsbewegung. Demgemäß greift das Betätigungsglied 14 von unten her an dem Kniehebel 8 unter einem Hebelarm zu dessen Schwenklager 7 an.

Für eine platzsparende und dennoch effektive Anordnung ist das Betätigungsglied bzw. die Schubstange 14 in einer in axialer Richtung gesehen außerhalb der Ausnehmung 5b der Wellenaufnahme 4 angeordneten Lochung 4a oder Bohrung der Wellenaufnahme 4 gegen die Kraft einer Feder 15 zum Lösen des Kniehebels 8, also zum Durchknicken nach oben verschiebbar.

Um diese Bewegung maschinell durchführen zu können, ist zum Abknicken des Kniehebels 8 beim Öffnen des Handrades 5 eine mechanische Verstellvorrichtung, im Ausführungsbeispiel ein Arbeitszylinder 16 mit einer Kolbenstange 17 vorgesehen, welcher in einer Bohrung 2a des Lagergehäuses 2 festgeschraubt ist. Durch diese Schraubverbindung hindurch kann die Kolbenstange 17 mit Hilfe des Kolbens des Zylinders 16 in Richtung der Schubstange 14 verschoben werden. Dies geht aber nur so lange, wie sich die Lochung 4a mit der Schubstange 14 etwa koaxial oberhalb der Kolbenstange 17 befindet. Rotiert die Wellenaufnahme 4, wird die in Fig.1 vertikal gezeichnete und in Ruhestellung auch vertikal angeordnete Schubstange 14 von der mechanischen Verstellvorrichtung und vor allem der Kolbenstange 17 abgekoppelt und im weiteren Verlauf der Drehung abgeschirmt, so daß während der Rotation die relativ massive Schubstange durch Fliegkräfte den Kniehebel 8 in Schließstellung halten kann, was außerdem durch die Kraft der Feder 15 unterstützt wird. Es kann also nur in einem begrenzten Sektor des Wickelwellenumfanges und zwar in der Position, in welcher das Handrad die richtige Stellung zum Öffnen hat, mit Hilfe der maschinellen Verstellvorrichtung wirklich der Kniehebel 8 entriegelt werden.

Die Schubstange 14 hat gemäß Fig.1 an ihrem unteren Ende einen die sie umwindende Druckfeder 15 stirnseitig übergreifenden Bund 14a, wobei die Druckfeder 15 mit der Schubstange 14 zusammen in der Ausnehmung oder Lochung 4a angeordnet ist. Die Druckfeder 15 stützt sich dabei mit ihrem dem Bund 4a entgegengesetzten Ende an einer Verengung 4e der Bohrung oder Ausnehmung 4a ab. Dies bedeutet, daß die Druckfeder 15 gespannt wird, wenn die Schubstange 14 den Kniehebel 8 nach oben verschwenkt, und daß sie die Schubstange 14 und somit den Kniehebel 8 in Schließstellung hält, wenn die maschinelle Verstellvorrichtung, also der Arbeitszylinder 16 nicht diese Kraft überwindet.

Es sei noch erwähnt, daß der Schenkel 10 des Kniehebels 8 als Doppellasche ausgebildet ist, deren Einzellaschen im Bereich des gemeinsamen Gelenkes 9 den anderen Schenkel 10a umgreifen.

Wird der Arbeitszylinder 16 betätigt, kann sich die Kolbenstange 17 in die Bohrung 2a hineinbewegen und bei richtiger Position der Wellenaufnahme 4 und des Handrades 5 die Schubstange 14 quer zur Drehachse der Wellenaufnahme 4 verschieben. Diese Verschiebung erfolgt auf den Befehl "Öffnen" und kann durch hydraulische oder pneumatische Kolbenarbeit, bei anderer Gestaltung der mechanischen Verstellvorrichtung auch durch Elektromotor mit Kurbel- oder Zahnstangentrieb erfolgen.

Durch diese Verschiebung der Schubstange 14 wird über den Bolzen 12 und den Hebelarm 13a der Kniehebel 8 um den Bolzen 7 in der Ausnehmung 4b der Wickelwelle nach außen geschwenkt, wodurch das gemeinsame Gelenk 9 nach oben bewegt und der zweite Schenkel 10 ebenfalls geschwenkt wird und zwar um den Bolzen 11. Dabei nimmt er das Handrad 5 aufgrund der Verkürzung der Abstände der beiden Bolzen 7 u.11 in deren Öffnungslage mit, bis die Kante 5c der Ausnehmung oder Fläche 5b hinter die Kante 4d der Ausnehmung 4c der Wellenaufnahme 4 gelangt. Nun ist ein Wickelstab oder Wickelbaum freigegeben und kann nach oben ausgehoben werden. Nach dem Einlegen eines neuen Wickelstabes wird auf den Befehl "Schließen und Verriegeln" die Kolbenstange 17 wieder nach unten aus dem Bereich der Lochung 4a soweit herausbewegt, daß die Kopffläche 17a dieser Kolbenstange 17 beim Verdrehen der Wellenaufnahme 4 diese nicht mehr berühren kann.

Die Druckfeder 15 schiebt die Schubstange 14 der Rückzugbewegung der Stange 17 folgend, nach unten und verschwenkt dabei über den Bolzen 12 den Kniehebel 8, bis der Hebelarm 13a auf dem als Schraube ausgebildeten Anschlag 13 aufliegt und sich somit der Kniehebel 8 wieder in seiner gestreckten Verriegelungsposition befindet. Somit kann das Verriegeln und Öffnen des Handrades und außerdem auch die eigentliche Schwenkbewegung für das Handrad 15 maschinell und ferngelenkt erfolgen.

## Patentansprüche

1. Klapplager mit einer eine Ausnehmung (4c) aufweisenden Wellenaufnahme (4) für eine mit einem stirnseitigen Zapfen fomschlüssig einlegbare Welle, einen Wickelstab od. dgl. zum Auf- oder Abwickeln von Werkstoffbahnen und mit einem mitdrehenden Handrad (5), das um eine quer zur Drehachse des Klapplagers verlaufende Schwenkachse (6) aus dem Bereich der Wellenaufnahme verschwenkbar ist und in Schließposition mit einer Verschlußöffnung (5b) der Ausnehmung (4c) der Wellenaufnahme (4) bildet und in dieser Verschlußstellung durch wenigstens ein zwischen Handrad (5) und Wellenaufnahme (4) angeordnetes Element verriegelbar ist, **dadurch gekennzeichnet,** daß das Verriegelungslement für das Handrad (5) ein Kniehebel (8) mit wenigstens zwei über ein gemeinsames Gelenk miteinander verbundenen Schenkeln (10, 10a) ist, dessen erster Schenkel (10) gelenkig mit der Wellenaufnahme (4) und dessen zweiter Schenkel (10) ebenfalls gelenkig mit dem Handrad (5) an einer von dessen Schwenkachse (6) beabstandeten Stelle befestigt ist, und daß der Kniehebel (8) in Schließstellung des Handrades (5) in Streckposition fixiert ist und seine Schenkel (10, 10a) beim Öffnen des Handrades (5) an ihrem gemeinsamen Gelenk (9) in eine Winkelstellung zueinander faltbar sind.

2. Klapplager nach Anspruch 1, dadurch gekennzeichnet, daß der Kniehebel (9) einerseits an der oberen Seite der Wellenaufnahme (4) und andererseits im Handrad (5) angeordneten Verschlußöffnung (5, 6) an dem Handrad (5) angreift.

3. Klapplager nach Anspruch 1 oder 2, dadurch gekennzeichnet, daß der Kniehebel (8) durch eine Haltekraft in Schließstellung gehalten ist, die beim Knicken des Kniehebels (8) um das gemeinsame Gelenk (9) zum Öffnen des Handrades (5) überwindbar ist.

4. Klapplager nach einem der Ansprüche 1 bis 3, dadurch gekennzeichnet, daß das gemeinsame Gelenk der beiden Kniebehlschenkel in Schließstellung auf der der Öffnungsrichtung entgegengesetzten Seite einer Verbindungslinie zwischen der Schwenklagerung des ersten Schenkels und der Anlenkung des zweiten Schenkels am Handrad angeordnet ist und diese Schließposition gegen ein Durchknicken entgegen der Öffnungsrichtung durch einen Anschlag (13)gesichert ist.

5. Klapplager nach einem der Ansprüche 1 bis 4, dadurch gekennzeichnet, daß an dem Kniehebel (8), vzw. an einem Schenkel, insbesondere· an dem mit der Wellenaufnahme (4) verbundenen Schenkel (10a), ein Betätigungsglied (14) zum Verschwenken und Öffnen des Kniehebels beim Aufschwenken des Handrades (5) angreift.

6. Klapplager nach einem der Ansprüche 1 bis 5, dadurch gekennzeichnet, daß der Kniehebel (8) beim Aufschwenken des Handrades (5) mit seinem gemeinsamen Gelenk (9) von der Schwenkachse (6) des Handrades (5) weg nach oben bewegbar ist.

7. Klapplager nach einem der Ansprüche 1 bis 6, dadurch gekennzeichnet, daß das Betätigungsglied (14) zum Öffnen des Kniehebels von unten her an dem Kniehebel (8), vzw. an einem von dem ersten Schenkel (10a) abgehenden Hebelarm (13a) angreift.

8. Klapplager nach einem der Ansprüche 1 bis 7, dadurch gekennzeichnet, daß das Betätigungsglied eine Schubstange (14) ist, die in einer in axialer Richtung gesehen außerhalb der Ausnehmung (5b) der Wellenaufnahme (4) angeordneten Lochung (4a) od. dgl. der Wellenaufnahme (4) vzw. gegen die Kraft einer Feder (15) zum Lösen des Kniehebels (8) nach oben verschiebbar ist.

9. Klapplager nach einem der Ansprüche 1 bis 8, dadurch gekennzeichnet, daß das zum Abknicken des Kniehebels (8) beim Öffnen des Handrades 85) eine mechanische Verstellvorrichtung, beispielsweise ein mit einem Kolben versehenen Arbeitszylinder (16), eine Verstellspindel, eine motorisch angetriebene Schub-oder Pleuelstange, eine Zahnstange od. dgl. vorgesehen ist.

10. Klapplager nach einem der Ansprüche 1 bis 9, dadurch gekennzeichnet, daß die maschinelle Verstellvorrichtung an der zum Öffnen des Kniehebels dienenden Schubstange etwa in deren Fortsetzung, unterhalb der Wellenaufnahme angreift.

11. Klapplager nach einem der Ansprüche 1 bis 10, dadurch gekennzeichnet, daß die Schubstange (14) an ihrem unteren Ende einen eine Druckfeder (15) übergreifenden Bund (14a) hat, daß die Druckfeder (15) mit der Schubstange (14) zusammen in der Ausnehmung (4a) für die Schubstange angeordnet ist und sich mit ihrem dem Bund (4a) entgegengesetzten Ende an einer Verengung (4e) der Ausnehmung (4a) abstützt.

12. Klapplager nach einem der Ansprüche 1 bis 11, dadurch gekennzeichnet, daß einer der Schenkel (10) des Kniehebels (8) als Doppellasche ausgebildet ist, deren Einzellaschen im Bereich des gemeinsamen Gelenkes (9) den anderen Schenkel (13a) umgreifen.

13. Klapplager nach einem der Ansprüche 1 bis 12, dadurch gekennzeichnet, daß die mechanische Verstellvorrichtung nur bei etwa vertikal angeordneter Schubstange (14) mit dieser in Wirkverbindung und bei demgegenüber verdrehter Wellenaufnahme (4) durch den Umfang dieser Wellenaufnahme von der Schubstange abgeschirmt und abgekoppelt ist.

14. Klapplager nach einem der Ansprüche 1 bis 13, dadurch gekennzeichnet, daß die Schwenklagerung des zweiten Schenkels (10) des Kniehebels (8) am Handrad (5) in einer an der Rückseite des Handrades (5) angeordneten, sich zu der Rückseite vorzugsweise erweiternden Ausnehmung (5a) angeordnet ist.

## Claims

1. A hinged bearing including a shaft carrier (4) having a recess (4c) for a shaft adapted to be inserted in a form-locking manner with a journal at the front end, a winding rod or the like for winding off or winding up webs of material and further including a co-rotating handwheel (5) which is adapted to be swung out of the area of the shaft carrier about a swivel axis (6) extending transversely of the axis of rotation of the hinged bearing and in the closed position forms with an opening (5b) a closure of the recess (4c) of the shaft carrier (4) and in said closed position is lockable by at least one element disposed between handwheel (5) and shaft carrier (4), **characterized in that** the locking element for the handwheel (5) is a toggle lever (8) with at least two limbs (10, 10a) interconnected through a common joint, the first limb (10a) thereof being swivel-mounted to the shaft carrier (4) and the second limb (10) thereof being swivel-mounted to the handwheel (5) at a location spaced from the swivel axis (6) of said handwheel and that in the closed position of the handwheel (5) the toggle lever (8) is fixed in the extended position and when the handwheel (5) is opened the limbs (10, 10a) of said toggle lever are foldable towards each other at the common joint (9) thereof into an angular position.

2. A hinged bearing as claimed in claim 1, characterized in that the toggle lever (8) engages on the one hand the upper side of the shaft carrier (4) and on the other hand engages the handwheel (5) above the opening (5b) disposed in the handwheel (5).

3. A hinged bearing as claimed in claim 1 or claim 2, characterized in that the toggle lever (8) is held in the closed position by a retaining force which can be overcome when the toggle lever (8) is folded about the common joint (9) to open the handwheel (5).

4. A hinged bearing as claimed in any one of claims 1 to 3, characterized in that in the closed position the common joint of the two limbs of the toggle lever is disposed on the side opposite the opening direction of a connecting line between the swivel bearing of the first limb and the linkage of the second limb to the handwheel and said closed position is secured by a stop (13) against folding in a direction opposite that of opening.

5. A hinged bearing as claimed in any one of claims 1 to 4, characterized in that the toggle lever (8), preferably a limb, particularly the limb (10a) connected to the shaft carrier (4), is engaged by an operating member (14) to swivel and open the toggle lever when the handwheel (5) is swung open.

6. A hinged bearing as claimed in any one of claims 1 to 5, characterized in that when the handwheel (5) is swung open the toggle lever (8) is upwardly movable with the common joint (9) thereof away from the swivel axis (6) of the handwheel (5).

7. A hinged bearing as claimed in any one of claims 1 to 6, characterized in that the operating member (14) for opening the toggle lever engages the toggle lever (8) from underneath, preferably engaging a lever arm (13a) departing from the first limb (10a).

8. A hinged bearing as claimed in any one of claims 1 to 7, characterized in that the operating member is a push rod (14) upwardly displaceable in a bore (4a) or the like which belongs to the shaft carrier (4) and is arranged in the axial direction outside the recess (5b) of the shaft carrier, said push rod being displaceable preferably against the force of a spring (15) to release the toggle lever (8).

9. A hinged bearing particularly as claimed in any one of claims 1 to 8, characterized in that a mechanical adjusting device, for example a working cylinder (16) provided with a piston, an adjusting spindle, a motor-driven push rod or connecting rod, a rack or the like is provided to fold the toggle lever (8) when the handwheel (5) is opened.

10. A hinged bearing as claimed in any one of claims 1 to 9, characterized in that the push rod serving to open the toggle lever is engaged by the mechanical adjusting device approximately coaxially, underneath the shaft carrier.

11. A hinged bearing as claimed in any one of claims 1 to 10, characterized in that the push rod (14) has at the lower end thereof a collar (14a) overlapping a compression spring (15), that the compression spring (15) together with the push rod (14) is arranged in the recess (4a) for the push rod and is braced with the end thereof opposite the collar (14a) against a constriction (4e) of the recess (4a).

12. A hinged bearing as claimed in any one of claims 1 to 11, characterized in that one of the limbs (10) of the toggle lever (8) takes the form of a double plate, the individual plates thereof embracing the other limb (10a) in the area of the common joint (9).

13. A hinged bearing as claimed in any one of claims 1 to 12, characterized in that the mechanical adjusting device is operatively connected to the push rod (14) only when the latter is arranged approximately vertically and when the shaft carrier (4) is rotated the mechanical adjusting device is shielded and uncoupled from the push rod by the circumference of said shaft carrier.

14. A hinged bearing as claimed in any one of claims 1 to 13, characterized in that the swivel bearing of the second limb (10) of the toggle lever (8) is arranged on the handwheel (5) in a recess (5a) which is disposed at the rear of the handwheel (5) and preferably widens to the rear.

## Revendications

1. Palier-bascule comprenant un logement d'arbre (4) qui comporte un évidement (4c) et qui est destiné à un arbre, un rouleau d'enrouler ou similaire, servant à enrouler ou à dérouler des bandes de matériau et pouvant y être inséré par conjugaison des formes par un bout d'arbre situé du côté frontal, et comprenant un volant (5) qui tourne avec lui, qui peut pivoter hors de la région du logement d'arbre autour d'un axe de pivotement (6) s'étendant transversalement par rapport à l'axe de rotation du palierbascule, qui, en position de fermeture, forme par une ouverture de blocage (5b) l'évidement (4c) du logement d'arbre (4) et qui peut être verrouillé dans cette position de fermeture par au moins un élément disposé entre le volant (5) et le logement d'arbre (4), caractérisé par le fait que l'élément de verrouillage destiné au volant (5) est constitué par un levier articulé (8) comprenant au moins deux branches (10, 10a) qui sont reliées entre elles par l'intermédiaire d'une articulation commune, dont la première branche (10) est fixée de manière articulée au logement d'arbre (4) et dont la deuxième branche (10a) est fixée au volant (5), également de manière articulée, en un endroit situé à distance de son axe de pivotement (6), et par le fait que le levier articulé (8) est fixé en position étendue dans la position de fermeture du volant (5), et que ses branches (10, 10a), lors de l'ouverture du volant (5), peuvent être pliées autour de leur articulation commune (9) en une position où elles forment un angle l'une par rapport à l'autre.

2. Palier-bascule selon la revendication 1, caractérisé par le fait que le levier articulé (8) est en prise d'un côté avec le côté supérieur du logement d'arbre (4) et, de l'autre côté, avec la volant (5), au-dessus de l'ouverture de blocage (5b) ménagée dans le volant (5).

3. Palier-bascule selon la revendication 1 ou 2, caractérisé par le fait que le lever articulé (8) est maintenu en position de fermeture par une force de maintien qui peut être vaincue pour l'ouverture du volant (5) lors du pliage du levier articulé (8) autour de l'articulation commune (9).

4. Palier-bascule selon l'une des revendications 1 à 3, caractérisé par le fait que, dans la position de fermeture, l'articulation commune des deux branches du levier articulé est disposée du côté opposé à la direction d'ouverture par rapport à une ligne reliant le montage pivotant de la première branche et l'articulation de la deuxième branche sur le volant, et que cette position de fermeture est bloquée par une butée (13) qui empêche un pliage complet vers l'opposé de la direction d'ouverture.

5. Palier-bascule selon l'une des revendications 1 à 4, caractérisé par le fait qu'un organe d'actionnement (14) destiné à faire pivoter et à ouvrir le levier articulé lors du pivotement d'ouverture du volant (5) est en prise sur le levier articulé (8), de préférence sur une branche et en particulier sur la branche (10a) qui est reliée au logement d'arbre (4).

6. Palier-bascule selon l'une des revendications 1 à 5, caractérisé par le fait que le levier articulé (8), lors du pivotement d'ouverture du volant (5), peut être déplacé vers la haut par son articulation commune (9) en s'écartant de l'axe de pivotement (6) du volant (5).

7. Palier-bascule selon l'une des revendications 1 à 6, caractérisé par le fait que, pour ouvrir le levier articulé, l'organe d'actionnement (14) est en prise depuis le bas sur le levier articulé (8), de préférence sur un bras de levier (13a) qui part de la première branche (10a).

8. Palier-bascule selon l'une des revendications 1 à 7, caractérisé par le fait que l'organe d'actionnement est une tige de poussée (14) qui, pour déclencher le levier articulé (8), peut être déplacée vers le haut, de préférence à l'encontre de la force d'un ressort (15), dans un perçage (4a) ou similaire du logement d'arbre (4) qui est disposé en direction axiale à l'extérieur de l'évidement (5b) du logement d'arbre (4).

9. Palier-bascule, en particulier selon l'une des revendications 1 à 8, caractérisé par le fait que, pour replier le levier article (8) lors de l'ouverture du volant (5), il est prévu un dispositif mécanique de déplacement. par exemple un cylindre de travail (16) muni d'un piston, une broche de déplacement, une tige de poussée ou une bielle entraînée par un moteur, une crémaillère ou similaire.

10. Palier-bascule selon l'une des revendications 1 à 9, caractérisé par le fait que le dispositif mécanique de déplacement attaque de manière à peu près coaxiale, et audessous du logement d'arbre, la tige de poussée qui sert à ouvrir le levier articulé.

11. Palier-bascule selon l'une des revendications 1 à 10, caractérisé par le fait que la tige de poussée (14) comporte à son extrémité inférieure un collet (14a) qui surplombe un ressort de compression (15), et par le fait que la ressort de compression (15) est disposé avec la tige de poussée (14) dans l'évidement (4a) destiné à la tige de poussée, et qu'il s'appuie par son extrémité opposée au collet (4a) sur un rétrécissement (4e) de l'évidement (4a).

12. Palier-bascule selon l'une des revendications 1 à 11, caractérisé par le fait que l'une des branches (10) du levier articulé (8) est réalisée sous la forme d'une patte double dont les pattes individuelles entourent l'autre branche (10a) dans la région de l'articulation commune (9).

13. Palier-bascule selon l'une des revendications 1 à 12, caractérisé par le fait que le dispositif mécanique de déplacement n'est relié de manière opérationnelle à la tige de poussée (14) que lorsque celle-ci est disposée à peu près verticalement, et qu'il est protégé et désaccouplé de la tige de poussée par le pourtour du logement d'arbre (4) lorsque ce logement d'arbre a tourné par rapport à lui.

14. Palier-bascule selon l'une des revendications 1 à 13, caractérisé par le fait que le montage pivotant de la deuxième branche (10) du levier articulé (8) sur le volant (5) est disposé sur un évidement (5a) qui est ménagé sur le côté arrière du volant (5) et qui s'élargit de préférence vers la côté arrière.

Fig.1

Fig. 2